# EUROPÄISCHE PATENTSCHRIFT

(11) **EP 1 771 646 B1**
(45) Veröffentlichungstag und Bekanntmachung des Hinweises auf die Patenterteilung: **07.10.2009**
(21) Anmeldenummer: 05762389.4
(22) Anmeldetag: 23.06.2005
(51) Int. Cl.: F02B 37/007, F02B 37/02, F01N 7/04

(54) **ANORDNUNG MIT EINER BRENNKRAFTMASCHINE**
ARRANGEMENT FOR AN INTERNAL COMBUSTION ENGINE
SYSTEME DOTE D'UN MOTEUR A COMBUSTION INTERNE

(30) Priorität: 15.07.2004 DE 102004034314
(43) Veröffentlichungstag der Anmeldung: 11.04.2007
(73) Patentinhaber: Volkswagen Aktiengesellschaft, 38436 Wolfsburg (DE)
(72) Erfinder: ENDRES, Helmut, 38518 Gifhorn (DE); POTT, Ekkehard, 38518 Gifhorn (DE); THIELE, Fred, 38471 Rühen (DE); THEOBALD, Jörg, 38165 Lehre (DE)
(86) Internationale Anmeldenummer: PCT/EP2005/006765
(87) Internationale Veröffentlichungsnummer: WO 2006/007931

(56) Entgegenhaltungen:
- DE-C- 650 569
- DE-C1- 3 639 090
- US-A1- 2003 188 535
- PATENT ABSTRACTS OF JAPAN Bd. 012, Nr. 272 (M-724), 28. Juli 1988 (1988-07-28) & JP 63 055326 A (MAZDA MOTOR CORP), 9. März 1988 (1988-03-09)

## Beschreibung

Die Erfindung betrifft eine Anordnung mit einer Brennkraftmaschine gemäß dem Oberbegriff des Anspruchs 1. Die Erfindung betrifft ferner einen Ottomotor gemäß dem Oberbegriff des Anspruchs 14.

In der EP 0 716 221 B1 ist eine Anordnung einer Brennkraftmaschine mit zwei Zylinderbänken mit zwei Abgassträngen beschrieben, die über ein Abgassammelrohr verbunden sind. Die Verbindung kann'lastabhängig hergestellt oder unterbrochen werden. In einem der Abgasstränge ist ein Turbolader angeordnet.

Aus der DE 650 569 C ist eine Brennkraftmaschine mit Turbolader und mindestens zwei getrennten Abgasleitungen bekannt. Ein Teil der Zylinder kann als Luftpumpe betrieben werden, wobei in diesem Fall die von diesen Zylindern geförderte Luft nicht in die Abgasleitungen, sondern in einen von den Abgasleitungen getrennten Behälter für Druckluft gefördert wird. Diese Verwendung von Zylinder als Luftpumpen schließt jedoch eine Einmündung der die Druckluft dieser Zylinder leitenden Leitungen in die Abgasleitungen aus. Statt wird die Druckluft an Verwendungsstellen zugeführt.

Aus der US 2003/188535 A1 ist eine aufgeladene Brennkraftmaschine mit zwei Abgasfluten bekannt. Jeder Abgasflute ist ein Turbolader mit Turbine zugeordnet und jeder Turbine ist eine diese überbrückende Bypassleitung zugeordnet. Weiterhin ist eine Abgas leitende Verbindung zwischen den beiden Abgasfluten stromauf der jeweiligen Turbinen vorgesehen, so dass das Abgas der ersten Abgasflute auch die Turbine in der zweiten Abgasflute antreiben kann, falls die der zweiten Abgasflute zugeordneten Zylinder abgeschaltet sind.

Der Erfindung liegt die Aufgabe zugrunde, eine Anordnung der o.g. Art sowie einen Ottomotor der o.g. Art anzugeben, bei der bzw. dem Drehmoment und Leistung erhöht ist.

Diese Aufgabe wird erfindungsgemäß durch eine Anordnung der o.g. Art mit den in Anspruch 1 gekennzeichneten Merkmalen und durch einen Ottomotor der o.g Art mit den in Anspruch 14 gekennzeichneten Merkmalen gelöst. Vorteilhafte Ausgestaltungen der Erfindung sind in den weiteren Ansprüchen beschrieben.

Hierzu ist es bei einer Anordnung der o.g. Art erfindungsgemäß vorgesehen, dass die Umgehungs-Abgasleitung unter Umgehung des wenigstens einen Turboladers mit dem ersten Abgasstrang verbunden ist.

Dies hat den Vorteil, dass ein Teil der Zylinder zum Erzielen einer Verbrauchsreduzierung abgeschaltet werden kann, ohne die Aufladung der Brennkraftmaschine negativ zu beeinflussen, so dass die erhöhte Leistung aufgrund der Aufladung erhalten bleibt.

Die erfindungsgemäße Anordnung mit einer Brennkraftmaschine mit mehreren Zylindern und wenigstens einem Turbolader weist eine Umgehungs-Abgasleitung von wenigstens einem Zylinder auf, der einem ersten Abgasstrang zugeordnet ist, die unter Umgehung des wenigstens einen Turboladers mit dem ersten Abgasstrang verbunden ist. Die Abgasturbine des Turboladers wird von weniger als allen Zylindern der Brennkraftmaschine beaufschlagt, vorzugsweise von der Hälfte der Zylinder. Besonders bevorzugt ist die Brennkraftmaschine ein Ottomotor. Durch dessen Aufladung kann dessen Leistung gesteigert werden. Zur Verbrauchsreduzierung kann das System vorteilhaft mit einer Zylinderabschaltung kombiniert werden. Durch die spezielle Anordnung des oder der Turbolader kann die Ansprechzeit des oder der Turbolader verkleinert werden.

Vorzugsweise sind die dem ersten Abgasstrang zugeordneten Zylinder in der ersten Zylinderbank und die dem zweiten Abgasstrang zugeordneten Zylinder in der zweiten Zylinderbank angeordnet, wobei erste und zweite Zylinderbank voneinander getrennt sind. Dies erleichtert die Steuerung eventuell abschaltbarer Zylinder bei hoher oder niedriger Leistungsanforderung an die Brennkraftmaschine. Günstig ist, wenn der Verdichter des wenigstens einen Turboladers alle Zylinder beider Zylinderbänke für das jeweils geforderte Drehmoment mit dem entsprechenden Luftmassenstrom versorgt. Es ist dann vorteilhafterweise eine einzige Drosselvorrichtung ausreichend, über die der von der Brennkraftmaschine benötigte Gesamtluftmassenstrom angesaugt wird. Zylinder, welche nicht die Turbine mit Abgas beaufschlagen, können bei niedrigen Lasten und/oder Drehzahlen mittels einer Zylinderabschaltung abgeschaltet oder wenigstens in ihrem Durchfluss reduziert werden. Vorzugsweise sind die Verdichtungsverhältnisse zylinderindividuell angepasst, beispielsweise eine höhere Verdichtung auf den Zylindern, die abschaltbar sind, und eine geringere Verdichtung auf den anderen.

In einer vorteilhaften Ausgestaltung ist in der Umgehungs-Abgasleitung ein zweiter Turbolader angeordnet. In einer bevorzugten Weiterbildung weist der zweite Turbolader eine vom ersten Turbolader abweichende Dimensionierung auf. Dies ermöglicht eine vorteilhafte Abstimmung auf verschiedene Leistungs- und Drehzahlbereiche der Brennkraftmaschine.

In einer vorteilhaften Ausgestaltung ist jeder Zylinderbank ein separater Turbolader zugeordnet, wobei eine Umgehungs-Abgasleitung von wenigstens einem Zylinder, der dem zweiten Abgasstrang zugeordnet ist, unter Umgehung des zweiten Turboladers mit dem zweiten Abgasstrang verbunden ist. Die Ansaugseite kann für beide Zylinderbänke gemeinsam sein. Alternativ kann sowohl eine Ansaugseite der Brennkraftmaschine als auch eine Abgasanlage vorzugsweise auf deren gesamten Lauflänge wenigstens zweiflutig getrennt sein, so dass die beiden Zylinderbänke jeweils eine eigene Luftversorgung aufweisen. Bei entsprechend geringer Lastanforderung kann ein Teil der Zylinder abgeschaltet werden, so das entweder auf einer Zylinderbank zumindest ein Teil bis hin zu allen Zylindern abgeschaltet werden, oder alternativ auf beiden Bänken jeweils einige Zylinder, vorzugsweise die gleiche Anzahl Zylinder, abgeschaltet werden. Demnach werden die beiden Turbolader von weniger als allen Zylindern einer Zylinderbank mit Abgas beaufschlagt. Das Abgas der übrigen Zylinder ist unter Umgehung der jeweiligen Turbine des jeweiligen Turboladers in den jeweiligen Abgasstrang einleitbar.

Bevorzugt ist die Brennkraftmaschine als Ottomotor mit Direkteinspritzung ausgebildet.

Weitere Ausbildungsformen und Aspekte der Erfindung werden unabhängig von einer Zusammenfassung in den Patentansprüchen ohne Beschränkung der Allgemeinheit im Folgenden anhand einer Zeichnung näher erläutert. Dabei zeigen
Fig. 1 eine Anordnung mit einer Brennkraftmaschine mit zwölf Zylindern und einem Turbolader, der von einem Abgasstrang mit Abgas beaufschlagbar ist;
Fig. 2 a, b eine Anordnung mit einer Brennkraftmaschine mit zwölf Zylindern und jeweils einem gleichartig dimensionierten Turbolader in jedem Abgasstrang (a) und mit unterschiedlich dimensionierten Turboladern (b) in jedem Abgasstrang;
Fig. 3 eine Anordnung mit einer Brennkraftmaschine mit zwei Turboladern, die jeweils nur von einem Teil aller Zylinder beaufschlagt werden.

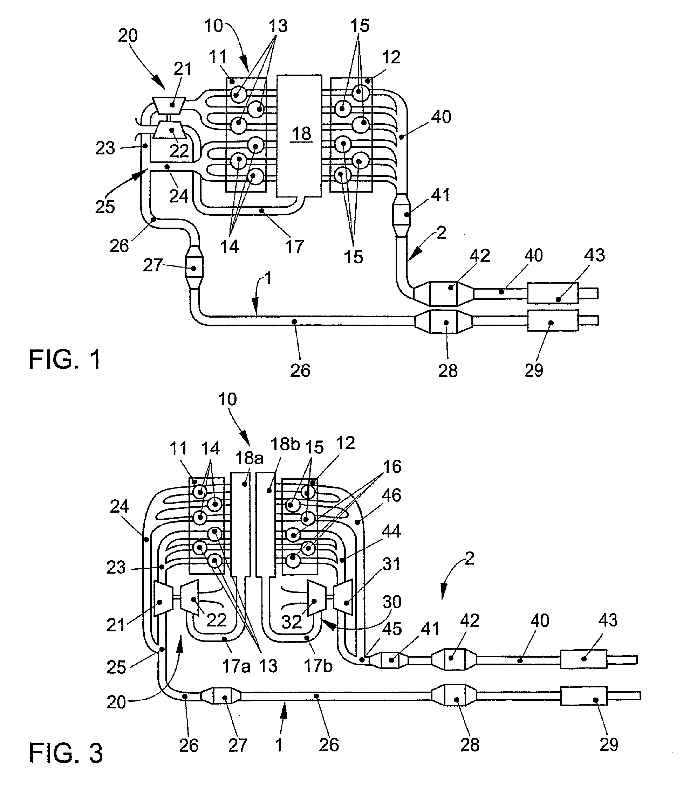

Figur 1 zeigt zur Veranschaulichung der Erfindung eine erste bevorzugte Ausgestaltung einer erfindungsgemäßen Anordnung. Eine als 12-Zylinder-Ottomotor ausgebildete Brennkraftmaschine 10 weist zwei getrennte Zylinderbänke 11 und 12 mit mehreren Zylindern 13 und 14 bzw. 15 auf. Solche Zylinder, die funktionell eine Gruppe bilden, sind jeweils mit gleicher Bezugsziffer versehen. Ein erster Abgasstrang 1 und ein zweiter Abgasstrang 2 verlaufen entlang ihrer gesamten Lauflänge zweiflutig getrennt. Ein Turbolader 20 ist im ersten Abgasstrang 1 angeordnet und mit seinem Verdichter 22 in einer Ansaugleitung 17 platziert. Der Verdichter 22 versorgt den den beiden Zylinderbänken 11, 12 gemeinsamen Luftverteiler 18 über die Ansaugleitung 17 mit einem Luftmassenstrom.

Nicht näher bezeichnete Abgasleitungen der Zylinder 15 der zweiten Zylinderbank 12 münden in eine Abgassammelleitung 40 des zweiten Abgasstrangs 2, in der entlang ihrer Lauflänge ein erster Katalysator 41, insbesondere ein Vorkatalysator, und ein zweiter Katalysator 42, insbesondere ein Hauptkatalysator, sowie ein Schalldämpfer 23 angeordnet ist. Die Zylinder 15 sind vorzugsweise abschaltbar, oder zumindest in ihrem Durchfluss reduzierbar, ausgebildet.

Im ersten Abgasstrang 1 ist eine Turbine 21 des Turboladers 20 in einer Abgasleitung 23 angeordnet, welche Abgas von nicht näher bezeichneten Abgasleitungen der Zylinder 13 sammelt und in eine Abgassammelleitung 26 des ersten Abgasstrangs 1 führt. In der Abgassammelleitung 26 sind in der entlang ihrer Lauflänge ein erster Katalysator 27, insbesondere ein Vorkatalysator, und ein zweiter Katalysator 28, insbesondere ein Hauptkatalysator, sowie ein Schalldämpfer 29 angeordnet. Stromauf des ersten Katalysator 27 mündet in einer Mündung 25 eine Abgasleitung 24, die über nicht näher bezeichnete Abgasleitungen Abgas der Zylinder 14 der ersten Zylinderbank 11 sammelt und der Abgassammelleitung 26 unter Umgehung des Turboladers 20 zuführt. Die Zylinder 14 sind vorzugsweise abschaltbar, oder zumindest in ihrem Durchfluss reduzierbar, ausgebildet.

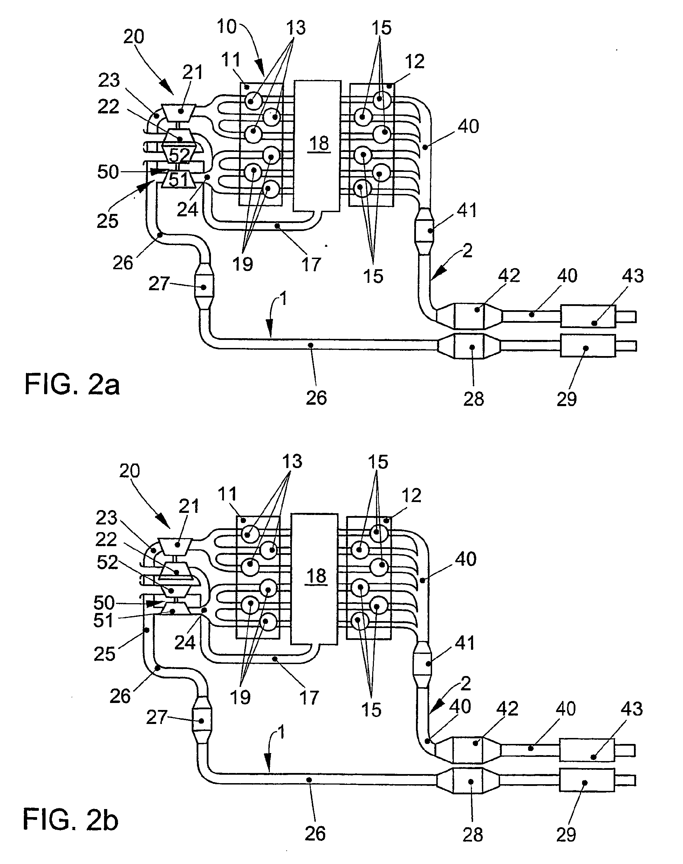

In Figur 2a, 2b ist eine günstige Weiterbildung der Anordnung der Figur 1 dargestellt, bei der ein weiterer Turbolader 50 im ersten Abgasstrang 1. angeordnet ist. Die Anordnung entspricht weitestgehend derjenigen in Figur 1, auf die zur Erläuterung verwiesen wird. Anders als in der vorangegangenen Figur ist in der Abgasleitung 24 eine Turbine 51 des Turboladers angeordnet, die vom Abgas der Zylinder 19 beaufschlagbar ist. Wie aus Figur 2a ersichtlich, sind beide Turbolader 20 und 50 gleich dimensioniert, während gemäß Figur 2b die beiden Turbolader 20 und 50 unterschiedliche dimensioniert sind. Die Zylinder 19 sind zweckmäßigerweise nicht abschaltbar ausgebildet. Der Verdichter 52 der Turbine 50 speist verdichtete Luft in die gemeinsame Ansaugleitung 17 ein und versorgt mit dem Verdichter 22 des Turboladers 20 den gemeinsamen Luftverteiler 18. Jeweils ein Teil der Zylinder 13 und 19 der ersten Zylinderbank 11, die dem ersten Abgasstrang 1 zugeordnet sind, umgeht jeweils einen der beiden der ersten Zylinderbank 11 bzw. dem ersten Abgasstrang 1 zugeordneten Turbolader 20 und 50 bzw. deren Turbinen 21, 51. Abgas der Zylinder 13 umgeht den zweiten Turbolader 50, während Abgas der Zylinder 19 den ersten Turbolader 20 umgeht.

Figur 3 verdeutlicht in einer schematischen Darstellung eine weitere bevorzugte Weiterbildung der Erfindung. Eine als 12-Zylinder-Ottomotor ausgebildete Brennkraftmaschine 10 weist zwei getrennte Zylinderbänke 11 und 12 mit mehreren Zylindern 13 und 14 bzw. 15 auf. Ein erster Abgasstrang 1 und ein zweiter Abgasstrang 2 verlaufen entlang ihrer gesamten Lauflänge zweiflutig getrennt. Ein erster Turbolader 20 ist mit seiner Turbine 21 im ersten Abgasstrang 1 angeordnet und ist mit seinem Verdichter 22 in einer Ansaugleitung 17a platziert. Der Verdichter 22 versorgt den Luftverteiler 18a der ersten Zylinderbank 11 mit einem Luftmassenstrom. Ein zweiter Turbolader 30 ist mit seiner Turbine 31 im zweiten Abgasstrang 2 angeordnet und mit seinem Verdichter 32 in einer Ansaugleitung 17b platziert. Der Verdichter 32 versorgt den Luftverteiler 18b der zweiten Zylinderbank 12 mit einem Luftmassenstrom.

Nicht näher bezeichnete Abgasleitungen der Zylinder 14 der ersten Zylinderbank 11 münden mit ihrer Umgehungs-Abgasleitung 24 in eine Abgassammelleitung 26 des ersten Abgasstrangs 1, in der entlang ihrer Lauflänge ein erster Katalysator 27, insbesondere ein Vorkatalysator, und ein zweiter Katalysator 28, insbesondere ein Hauptkatalysator, sowie ein Schalldämpfer 29 angeordnet sind. Die Zylinder 14 sind vorzugsweise abschaltbar ausgebildet. Eine weitere Gruppe von Zylindern 13 leitet ihr Abgas über ihre nicht näher bezeichneten Abgasleitungen in eine Abgassammelleitung 23, die das Abgas zur Turbine 21 des ersten Turboladers 20. Die Umgehungs-Abgasleitung 24 mündet an ihrer Einmündung 25 stromab der Turbine 21 in die Abgassammelleitung 26.

Die Anordnung an den zweiten Zylinderbank 12 ist in der Figur spiegelsymmetrisch zur ersten Zylinderbank 11 aufgebaut. Nicht näher bezeichnete Abgasleitungen der Zylinder 15 der zweiten Zylinderbank 12 sind über eine Umgehüngs-Abgasleitung 46 in eine Abgassammelleitung 40 des zweiten Abgasstrangs 2 geführt, in die diese an einer Mündung 45 einmündet. Entlang der Lauflänge der Abgassammelleitung 40 ist ein erster Katalysator 41, insbesondere ein Vorkatalysator, und ein zweiter Katalysator 42, insbesondere ein Hauptkatalysator, sowie ein Schalldämpfer 43 angeordnet sind. Die Zylinder 15 sind vorzugsweise abschaltbar ausgebildet. Eine weitere Gruppe von Zylindern 16 leitet ihr Abgas über ihre nicht näher bezeichneten Abgasleitungen in eine Abgassammelleitung 44, die das Abgas zur Turbine 31 des zweiten Turboladers 30 führt. Die Umgehungs-Abgasleitung 46 mündet an ihrer Einmündung 45 stromab der Turbine 31 in die Abgassammelleitung 40.

## Patentansprüche

1. Anordnung mit einer Brennkraftmaschine (10) mit mehreren Zylindern (13, 14, 15, 16, 19) und wenigstens einem Turbolader (20) sowie einem ersten und einem zweiten Abgasstrang (1, 2), wobei eine Turbine (21) des wenigstens einen Turboladers (20) dem ersten Abgasstrang (1) zugeordnet ist, wobei die Turbine (21) von weniger als allen Zylindern des ersten Abgasstrangs (1) beaufschlagt wird, wobei eine Umgehungs-Abgasleitung (24) ausgehend von wenigstens einem Zylinder (14, 19), der dem ersten Abgasstrang (1) zugeordnet ist, jedoch nicht die Turbine (21) beaufschlagt vorgesehen ist, **dadurch gekennzeichnet, dass** die Umgehungs-Abgasleitung (24) unter Umgehung des wenigstens einen Turboladers (20) mit dem ersten Abgasstrang (1) verbunden ist.

2. Anordnung nach Anspruch 1, **dadurch gekennzeichnet, dass** die Zylinder (13, 14, 15, 16, 19) in wenigstens einer ersten Zylinderbank (11) und einer zweiten Zylinderbank (12), welche voneinander getrennt sind, angeordnet sind.

3. Anordnung nach Anspruch 2, **dadurch gekennzeichnet, dass** die dem ersten Abgasstrang (1) zugeordneten Zylinder (13, 14, 19) in der ersten Zylinderbank (11) und die dem zweiten Abgasstrang (40) zugeordneten Zylinder (15, 16) in der zweiten Zylinderbank (12) angeordnet sind.

4. Anordnung nach einem der vorhergehenden Ansprüche, **dadurch gekennzeichnet, dass** in der Umgehungs-Abgasleitung (24) ein zweiter Turbolader (50) angeordnet ist.

5. Anordnung nach Anspruch 4, **dadurch gekennzeichnet, dass** der zweite Turbolader (20) eine vom ersten Turbolader (50) abweichende Dimensionierung aufweist.

6. Anordnung nach einem der vorhergehenden Ansprüche, **dadurch gekennzeichnet, dass** jeder Zylinderbank (11, 12) ein separater Turbolader (20, 30) zugeordnet ist.

7. Anordnung nach Anspruch 6, **dadurch gekennzeichnet, dass** eine Umgehungs-Abgasleitung (46) von wenigstens einem Zylinder (16), der dem zweiten Abgasstrang (2) zugeordnet ist, unter Umgehung des zweiten Turboladers (30) mit dem zweiten Abgasstrang (2) verbunden ist.

8. Anordnung nach einem der Ansprüche 2 bis 7, **dadurch gekennzeichnet, dass** beide Zylinderbänke (11, 12) jeweils eine eigene Luftversorgung (1 8a, 18b) aufweisen.

9. Anordnung nach einem der Ansprüche 2 bis 7, **dadurch gekennzeichnet, dass** die beiden Zylinderbänke (11, 12) eine gemeinsame Luftversorgung (18) aufweisen.

10. Anordnung nach einem der vorhergehenden Ansprüche, **dadurch gekennzeichnet, dass** die beiden Abgasstränge (1, 2) entlang ihrer Lauflänge mindestens zweiflutig getrennt sind.

11. Anordnung nach Anspruch 10, **dadurch gekennzeichnet, dass** Zylinder (14, 15, 19), deren Abgas unter Umgehung einer Turbine (21, 31, 51) eines Turboladers (20, 30, 50) in den Abgasstrang (1, 2) führbar ist, in ihrem Durchfluss zumindest reduzierbar ausgebildet sind.

12. Anordnung nach Anspruch 11, **dadurch gekennzeichnet, dass** die Zylinder (14, 15, 19) in ihrem Durchfluss vollständig abschaltbar ausgebildet sind.

13. Anordnung nach Anspruch 11 oder 12, **dadurch gekennzeichnet, dass** der oder die abschaltbaren Zylinder (14, 15, 19) eine höhere Verdichtung aufweisen als die nicht abschaltbaren Zylinder (13, 16).

14. Ottomotor mit Direkteinspritzung **dadurch gekennzeichnet, dass** dieser mit einer Anordnung nach einem der vorhergehenden Ansprüche ausgebildet ist.

## Claims

1. Arrangement comprising an internal combustion engine (10) having a plurality of cylinders (13, 14, 15, 16, 19) and having at least one turbocharger (20) and also having a first and a second exhaust section (1, 2), with a turbine (21) of the at least one turbocharger (20) being assigned to the first exhaust section (1), with the turbine (21) being acted on by fewer than all of the cylinders of the first exhaust section (1), and with a bypass exhaust line (24) being provided proceeding from at least one cylinder (14, 19) which is assigned to the first exhaust section (1) but which does not act on the turbine (21), **characterized in that** the bypass exhaust line (24) is connected to the first exhaust section (1) so as to bypass the at least one turbocharger (20).

2. Arrangement according to Claim 1, **characterized in that** the cylinders (13, 14, 15, 16, 19) are arranged in at least one first cylinder bank (11) and one second cylinder bank (12) which are separate from one another.

3. Arrangement according to Claim 2, **characterized in that** those cylinders (13, 14, 19) which are assigned to the first exhaust section (1) are arranged in the first cylinder bank (11) and those cylinders (15, 16) which are assigned to the second exhaust section (40) are arranged in the second cylinder bank (12).

4. Arrangement according to one of the preceding claims, **characterized in that** a second turbocharger (50) is arranged in the bypass exhaust line (24).

5. Arrangement according to Claim 4, **characterized in that** the second turbocharger (20) has different dimensions to the first turbocharger (50).

6. Arrangement according to one of the preceding claims, **characterized in that** each cylinder bank (11, 12) is assigned a separate turbocharger (20, 30).

7. Arrangement according to Claim 6, **characterized in that** a bypass exhaust line (46) from at least one cylinder (16) which is assigned to the second exhaust section (2) is connected to the second exhaust section (2) so as to bypass the second turbocharger (30).

8. Arrangement according to one of Claims 2 to 7, **characterized in that** the two cylinder banks (11, 12) each have a separate air supply (18a, 18b).

9. Arrangement according to one of Claims 2 to 7, **characterized in that** the two cylinder banks (11, 12) have a common air supply (18).

10. Arrangement according to one of the preceding claims, **characterized in that** the two exhaust-sections (1, 2) are separated into at least two channels along their running length.

11. Arrangement according to Claim 10, **characterized in that** cylinders (14, 15, 19) whose exhaust gas can be conducted into the exhaust section (1, 2) having bypassed a turbine (21, 31, 51) of a turbocharger (20, 30, 50) are designed such that their throughflow can be at least reduced.

12. Arrangement according to Claim 11, **characterized in that** the cylinders (14, 15, 19) are designed such that their throughflow can be completely shut off.

13. Arrangement according to Claim 11 or 12, **characterized in that** the one or more cylinders (14, 15, 19) which can be shut off have a higher compression ratio than the cylinders (13, 16) which cannot be shut off.

14. Spark-ignition engine with direct injection, **characterized in that** said spark-ignition engine is provided with an arrangement according to one of the preceding claims.

## Revendications

1. Agencement comprenant un moteur à combustion interne (10) avec plusieurs cylindres (13, 14, 15, 16, 19) et au moins un turbocompresseur (20) ainsi qu'une première et une deuxième section d'échappement (1, 2), une turbine (21) de l'au moins un turbocompresseur (20) étant associée à la première section d'échappement (1), la turbine (21) n'étant pas sollicitée par tous les cylindres de la première section d'échappement (1), une conduite de gaz d'échappement de contournement (24) partant d'au moins un cylindre (14, 19), qui est associé à la première section d'échappement (1) mais ne sollicite pas la turbine (21), étant prévue, **caractérisé en ce que** la conduite d'échappement de contournement (24) est connectée à la première section d'échappement (1) en contournant l'au moins un turbocompresseur (20).

2. Agencement selon la revendication 1, **caractérisé en ce que** les cylindres (13, 14, 15, 16, 19) sont disposés dans au moins une première rangée de cylindres (11) et une deuxième rangée de cylindres (12), qui sont séparées l'une de l'autre.

3. Agencement selon la revendication 2, **caractérisé en ce que** les cylindres (13, 14, 19) associés à la première section d'échappement (1) sont disposés dans la première rangée de cylindres (11) et les cylindres (15, 16) associés à la deuxième section d'échappement (40) sont disposés dans la deuxième rangée de cylindres (12).

4. Agencement selon l'une quelconque des revendications précédentes, **caractérisé en ce qu'**un deuxième turbocompresseur (50) est disposé dans la conduite d'échappement de contournement (24).

5. Agencement selon la revendication 4, **caractérisé en ce que** le deuxième turbocompresseur (20) présente un dimensionnement s'écartant du premier turbocompresseur (50).

6. Agencement selon l'une quelconque des revendications précédentes, **caractérisé en ce que** l'on associe à chaque rangée de cylindres (11, 12) un turbocompresseur séparé (20, 30).

7. Agencement selon la revendication 6, **caractérisé en ce qu'**une conduite d'échappement de contournement (46) d'au moins un cylindre (16), qui est associé à la deuxième section d'échappement (2), est connectée à la deuxième section d'échappement (2) en contournant le deuxième turbocompresseur (30).

8. Agencement selon l'une quelconque des revendications 2 à 7, **caractérisé en ce que** les deux rangées de cylindres (11, 12) présentent chacune une alimentation d'air propre (18a, 18b).

9. Agencement selon l'une quelconque des revendications 2 à 7, **caractérisé en ce que** les deux rangées de cylindres (11, 12) présentent une alimentation d'air commune (18).

10. Agencement selon l'une quelconque des revendications précédentes, **caractérisé en ce que** les deux sections d'échappement (1, 2) sont séparées le long de leur longueur de fonctionnement suivant au moins deux flux.

11. Agencement selon la revendication 10, **caractérisé en ce que** les cylindres (14, 15, 19), dont le gaz d'échappement peut être guidé en contournant une turbine (21, 31, 51) d'un turbocompresseur (20, 30, 50) dans la section d'échappement (1, 2), sont réalisés de manière à pouvoir au moins réduire leur écoulement transversal.

12. Agencement selon la revendication 11, **caractérisé en ce que** les cylindres (14, 15, 19) sont réalisés de manière à pouvoir complètement fermer leur écoulement transversal.

13. Agencement selon la revendication 11 ou 12, **caractérisé en ce que** le ou les cylindres (14, 15, 19) pouvant être fermés présentent une compression plus importante que les cylindres (13, 16) ne pouvant pas être fermés.

14. Moteur Otto à injection directe, **caractérisé en ce qu'**il est réalisé avec un agencement selon l'une quelconque des revendications précédentes.
